# EUROPEAN PATENT SPECIFICATION

(11) **EP 2 762 737 B1**
(45) Date of publication and mention of the grant of the patent: **18.01.2017**
(21) Application number: 13153414.1
(22) Date of filing: 31.01.2013
(51) Int. Cl.: F16C 33/66

(54) **Direct drive turbine comprising a bearing and method of collecting a lubricant leaking out of a bearing**
Direktangetriebene Windkraftanlage mit einem Lager und Verfahren zum Sammeln einer Schmiermittelleckage aus einem Lager
Eolienne à entraînement direct avec un roulement et procédé de collecte d'une fuite de lubrifiant d'un palier

(43) Date of publication of application: 06.08.2014
(73) Proprietor: Siemens Aktiengesellschaft, 80333 München (DE)
(72) Inventor: Frydendal, Niels Karl, 7400 Herning (DK)

(56) References cited:
- EP-A1- 1 925 820
- EP-A1- 2 166 242
- EP-A1- 2 565 477
- CN-U- 201 747 524

## Description

### FIELD OF THE INVENTION

The present invention relates generally to an improved bearing of a direct drive wind turbine. More specifically, it relates to a bearing with a lubricant collection system. Furthermore, the invention relates to a method of collecting a lubricant leaking out of a bearing of a direct drive wind turbine.

### BACKGROUND OF THE INVENTION

A bearing in general encompasses at least two parts which are moving relatively to each other. Typically, friction between the moving parts of a bearing occurs. To reduce the friction and thus to increase efficiency and to enhance lifetime of the bearing, a lubricant is frequently added between the moving parts.

Bearings are used in a whole range of machines, apparatuses and devices. As an example, bearings are used in wind turbines. A wind turbine generally comprises a tower, a nacelle and a rotor. The rotor may comprise a rotor shaft and a rotor hub where a number of rotor blades are attached to. The rotor shaft, which is rotating around an axis of rotation during operation of the wind turbine, is typically connected with the stationary part of the wind turbine by means of a bearing, which is denoted a rotor shaft bearing or a main bearing.

The main bearing of a wind turbine is typically lubricated by grease, which is a type of semisolid lubricant, or by oil, which is a type of liquid lubricant. The main bearing usually comprises a stationary bearing component and a rotational bearing component, each comprising a contact face. The lubricant may then preferably be accommodated in a section between the contact face of the stationary bearing component and the contact face of the rotational bearing component. Typically, a certain amount of the lubricant is leaking out of the section between the contact faces of the stationary and the rotational bearing component during operation, i.e. rotation of the rotor. The leaking lubricant may attach to outer sections of the bearing, e.g. a front face of the bearing, or to other parts of the wind turbine, e.g. the rotor hub or the tower. The functionality of the main bearing or of the other parts of the wind turbine may be compromised by attachment of the leaking lubricant. Furthermore, the leaking lubricant may cause an aesthetically unpleasant impression to an observer contemplating the wind turbine. Finally, the leaking lubricant may get in contact with the environment in the vicinity of the wind turbine and cause ecological damage.

The European patent application EP 2 565 477 A1 of the same applicant, which was not published before the filing date of the present application and which represents prior art according to Art. 54(3), describes a way of collecting lubricant which is leaking out of a bearing by providing a bearing system for a wind turbine comprising a rotatable scraper and a stationary scraper. However, this system is relatively complex to implement and to service.

EP 2 166 242 A1 discloses a bearing arrangement in which lubricant is scraped-off from a rotating shaft.

Consequently, an alternative of collecting lubricant which is leaking out of a bearing is needed in order to avoid distribution of the lubricant, particularly among components adjacent to the bearing and/or among the environment.

### SUMMARY OF THE INVENTION

This objective is achieved by the independent claims. The dependent claims describe advantageous developments and modifications of the invention.

A bearing of a direct drive wind turbine, with a lubricant collection system is provided. The bearing comprises a first bearing component with a first contact face and a first front face. It furthermore comprises a second bearing component with a second contact face and a second front face. The first front face is coupled with the first contact face; the second front face is coupled with the second contact face. The first bearing component and the second bearing component are movable relative to each other. The first contact face and the second contact face are prepared and arranged in a way to accommodate a lubricant. Furthermore, the bearing comprises a scraper, which is attached to the first front face and is in contact with the second front face. Finally, the scraper is arranged and prepared to scrape off the lubricant which escapes from in-between the first contact face and the second contact face and adheres to the second front face. The scraper is also arranged and prepared to guide the lubricant to a lubricant collection device by means of gravitational force. The bearing is arranged in a direct drive wind turbine.

A bearing in general comprises a first bearing component and at least a second bearing component which are moving relative to each other. There exists a whole range of bearing types, such as plain bearings, rolling element bearings, fluid bearings, magnetic bearings, jewel bearings or flexure bearings.

The first bearing component comprises a first contact face, also denoted as a first contact area. As the first bearing component is a three-dimensional object, obviously a surface can be assigned to the first bearing component. A part of the surface of the first bearing component, which is arranged to be in direct and/or indirect physical contact with a surface of the second bearing component, is referred to as first contact face.

The first bearing component furthermore comprises a first front face which is coupled with, i.e. joined to, the first contact face. The first bearing component may furthermore comprise a further front face, also being coupled with the first contact face.

The second bearing component comprises a second contact face and a second front face, which are defined analogously to the first contact face and the first front face, respectively.

As an example and in order to clarify the notion of contact faces and front faces, the bearing may exemplarily comprise a first hollow cylinder with a first axis of rotation and a second hollow cylinder with a second axis of rotation, the first hollow cylinder acting as the first bearing component and the second hollow cylinder acting as the second bearing component. The first hollow cylinder may have a first outer radius and a first inner radius and the second hollow cylinder may have a second outer radius and a second inner radius. The first outer radius may be smaller than the second inner radius. The first hollow cylinder and the second hollow cylinder may be arranged such that the first axis of rotation and the second axis of rotation coincide. Then, a surface section of the first hollow cylinder which is radially most distal from the first axis of rotation is referred to as the first contact face, while a surface section of the second hollow cylinder which is radially closest to the second axis of rotation is referred to as the second contact face. Additionally, the first hollow cylinder may have a first front face and a second front face, both front faces being perpendicular and adjacent to the first contact face. Analogously, the second hollow cylinder may have a third front face and a fourth front face, both front faces being perpendicular and adjacent to the second contact face. The first bearing component, the second bearing component and any further bearing component comprised by the bearing will in the following also be denoted simply as a bearing component. The first contact face, the second contact face and any further contact face comprised by a bearing component will in the following also be denoted simply as a contact face. Finally, the first front face, the second front face and any further front face comprised by a bearing component will in the following also be denoted simply as a front face.

As already mentioned before and illustrated in the example of the bearing comprising two hollow cylinders as bearing components, the contact face of a bearing component is a surface section of the bearing component which is arranged to be in direct and/or indirect physical contact with a surface section of another bearing component. The contact face may comprise a planar section and/or a curved section, e.g. a convexly curved section and/or a concavely curved section. The contact face may furthermore comprise an edge, also denoted by a ridge.

The front face of a bearing component is a surface section of the bearing component other than the contact section. According to the invention, the front face is coupled with, i.e. joined to, the contact face. The front face may comprise an angle with the contact face. In particular, the angle may be in the range between 75° and 105°. Analogously to the contact face, also the front face may comprise a planar section, a curved section and/or an edge.

The front face and the contact face can directly be coupled with each other, i.e. they are adjoining each other. Alternatively, a further surface section may be in-between the front face and the contact face. Then the further surface section adjoins both the contact face and the front face. As an example, the first bearing component may comprise a first angle between the contact face and the further surface section, the first angle being 40°, and it may comprise a second angle between the further surface section and the front face, the second angle being 50°.

The bearing furthermore comprises a section between the first contact face and the second contact face. This section, also denoted as a contact section, may partially or wholly fill the section between the first contact face and the second contact face. The contact section is arranged to host a lubricant. The lubricant is a substance introduced to reduce friction between the moving surface sections. Additionally, it may also have a function of transporting foreign particles. The lubricant is filling completely or partially the contact section.

A bearing may be joined with further components of a machine, or further integrated in an apparatus or a device. Then, the first bearing component may be fastened or fixed to one of the further components of the machine and the second bearing component may be arranged such that it is movable relative to the first bearing component. Obviously, also the second bearing component may be fixed to components of the machine, the components differing to the further components where the first bearing component is attached to. It has to be stressed, though, that the first bearing component has to be movable relative to the second bearing component.

The bearing according to the invention furthermore comprises a scraper. The scraper, which may also be called a spatula or a grattoir, may comprise a scraper blade, a scraper handle and a scraper attachment mechanism, aiming to attach the scraper to one of the bearing components. The scraper blade has a function to scrape off lubricant that adheres to a front face. Thus, it is advantageous that the scraper blade and the front face are flush with each other, i.e. that they are bordering on each other.

It is necessary that the scraper is attached to a bearing component other than a bearing component where the scraper is designated to scrape off the lubricant. As the bearing according to the invention comprises at least two bearing components, the scraper is attached to the first bearing component and scrapes off the lubricant from the second bearing component. More specifically, the scraper is attached to the first front face of the first bearing component and scrapes off the lubricant from the second front face of the second bearing component.

The attachment of the scraper to the first front face may be realised e.g. by a screw, a glue or a flange.

Next to scraping off the lubricant, the scraper also has the function to guide the scraped off lubricant to a lubricant collection device. It is thus advantageous that the scraper is assembled with the second front face in such a way that it comprises a scraping angle greater than 90° relative to the direction of movement. Consequently, the lubricant that is scraped off from the second front face is guided to the first front face. There, a lubricant collection device to collect the scraped off lubricant is arranged and prepared.

More specifically, the scraping angle may be in the range of 110° to 160°, particularly in the range of 125° to 145°.

The lubricant that is scraped off by the scraper is guided to the lubricant collection device by means of gravitational force.

In a first embodiment, the first contact face and the first front face adjoin each other at a first bearing edge and form a first angle. Additionally, the second contact face and the second front face adjoin each other at a second bearing edge and form a second angle. The lubricant escapes along the first bearing edge and/or the second bearing edge.

In particular, the first angle and/or the second angle may be in the range of 70° and 110°. Preferably, the first angle and the second angle are in the range of 85° and 95°. Angles in such a range have the advantage of an easy assembly and construction of the bearing.

The first bearing edge, the second bearing edge and any further bearing edge comprised by a bearing component will in the following also be denoted simply as a bearing edge.

The bearing edge can be understood as a shared boundary between the contact face and the front face. The bearing edge may comprise a sharp section and/or a rounded section. The bearing edge may for example be a line segment, a square or a circle, depending on the configuration of the respective bearing component.

In another embodiment, the first bearing edge is separated from the second bearing edge by a bearing gap.

As already described above, the first contact face is separated from the second contact face by a section, the so-called contact section, where the lubricant is arranged to be accommodated. As the contact face is, at least partially, limited by the bearing edge, consequently also the first bearing edge is separated from the second bearing edge by a spacing. This spacing is called a bearing gap. A function and advantage of the bearing gap is an easy channelling of depleted lubricant that shall be replaced and thus shall flow out from the contact section.

Extent of the bearing gap varies considerably depending on application and usage of the bearing. In a wind turbine for example, the extent of the bearing gap may preferably be less than 10 cm, in particular less than 5 cm, and most preferably less than 2 cm.

In another embodiment the bearing comprises a plain bearing and/or a rolling element bearing, in particular a tapered roller bearing.

A plain bearing comprises a linear bearing providing a linear motion, a journal bearing, which is e.g. simply a shaft rotating in a bearing, or a thrust bearing providing a bearing surface for forces acting axial to a shaft.

A rolling element bearing comprises balls or rollers which aim reducing friction between the first bearing component and the second bearing component. Rolling elements that are used in rolling element bearings may be cylindrical rollers, tapered rollers, spherical rollers or needles.

A tapered roller bearing has particularly the advantage that it can take large axial forces as well as being able to sustain large radial forces. This is e.g. very beneficial for the use of the bearing as a main bearing in a wind turbine.

Another alternative is a fluid bearing. A fluid bearing supports the bearing's loads solely on a layer of liquid or gas, in particular a thin layer of liquid or gas with a layer thickness below 1 mm (millimetre). Hydrostatic bearings are externally pressurized fluid bearings, where a fluid, e.g. oil, water or air, is pressurized by a pump. Hydrodynamic bearings rely on a high speed of a journal, a journal being a part of a shaft resting on the fluid, to pressurize the fluid in a wedge between the contact faces of the bearing components.

In a preferred embodiment, the first bearing component is movable relative to the second bearing component by a rotational movement.

The first bearing component and/or the second bearing component may comprise an annular shape. In particular, the first bearing component and/or the second bearing component may comprise the shape of a hollow cylinder. A smart and advantageous of the bearing is realised when the first bearing component and the second bearing component comprise a common axis of rotation, i.e. both bearing components may be nested, i.e. interlaced.

In another embodiment, the lubricant collection device comprises a guiding component and a receptacle. Furthermore, the guiding component and/or the receptacle is attached to the first front face.

The guiding component may simply be a baffle, i.e. a plane guide plate which is e.g. attached perpendicularly to the second front face. If its lateral extent is sufficiently large, significant outflow of scraped off lubricant beyond a rim of the baffle can be avoided. Alternatively, the guiding component may comprise a gutter or ditch or groove. An advantage of the gutter as guiding component is that it comprises a rim, which avoids outflow of lubricant even at relatively small lateral extensions of the gutter.

If exemplarily the bearing component is a hollow cylinder with a cylindrical curvature, the gutter may be curved with a curve being equivalent to the cylindrical curvature. In other words, if the hollow cylinder comprises an inner radius and an outer radius, then the gutter may comprise a gutter radius which is larger than the inner radius and smaller than the outer radius of the hollow cylinder.

The gutter may comprise the shape of an arc. In particular it may have the shape of a quarter circle or the shape of a half circle. The gutter may comprise metal, in particular aluminum.

The receptacle may comprise a bin. The lubricant collection device may comprise an arc-shaped gutter and two bins, one at each end of the arc-shaped gutter. It is advantageously to design a bin with a holding capacity sufficiently large that it corresponds to an interval of emptying the bin, e.g. by servicing the bearing.

In another embodiment, the lubricant is a dry lubricant, a semisolid lubricant or a liquid lubricant.

A dry lubricant, also denoted as a solid lubricant, comprises polytetrafluoroethylene (PTFE), which may be used as a coating layer. It further comprises inorganic solids, e.g. graphite, hexagonal boron nitride, molybdenum disulfide or tungsten disulfide. Furthermore, metal alloys, composites and pure metals are acting as a dry lubricant, too.

A liquid lubricant may comprise base oil, e.g. a mineral oil or a vegetable oil. Furthermore, it may comprise at least one additive, such as a detergent additive, a corrosion or rust inhibiting additive, an antioxidant additive or a metal deactivator for creating a film on a metal surface to prevent a metal being oxidized.

An example of a semisolid lubricant is grease. Grease may comprise a soap which is emulsified with mineral oil or vegetable oil. A characteristic feature of grease is that it possesses a high initial viscosity, which, upon an application of shear, drops; a phenomenon which is called thixotropy. Grease is a lubricant that may in particular be used in bearings of wind turbines.

In a preferred embodiment the lubricant comprises a mineral oil, a vegetable oil and/or a synthetic oil.

An example of a vegetable oil which is suitable for a lubricant is a triglyceride ester derived from a plant, e.g. canola oil, castor oil, palm oil, sunflower seed oil or rapeseed oil. Furthermore, a synthetic oil may also be comprised in the lubricant, e.g. polyalpha-olefin, synthetic esters, polyalkylene glycols, phosphate esters, alkylated naphthalenes, silicate esters or ionic fluids.

The invention is also directed towards a bearing as described above that is arranged, i.e. comprised, in a wind turbine.

The wind turbine, which is also called a wind power plant or a wind power station, may comprise a nacelle. It may furthermore also comprise a tower and a rotor. The tower is secured with the ground by means of a foundation. The nacelle may provide space for a generator, a brake and a shaft of the rotor. It can furthermore accommodate a gear box and a further shaft of the rotor. The wind turbine may also feature a yaw system, which orientates the wind turbine towards a direction of the wind. The yaw system comprises a yaw drive, a yaw drive motor and a yaw bearing, and is located in the tower and/or the nacelle. Most large modern horizontal-axis wind turbines feature a rotor blade pitch control in order to adjust rotation speed of the rotor. A rotor blade pitch involves turning the rotor blades and thus changing an angle of attack of the rotor blades.

Maintenance of a wind turbine, in particular an off-shore wind turbine, may be costly and complex. A lubricant collection system is a significant benefit for a wind turbine, as thereby leaking lubricant can effectively controlled and collected and thus servicing intervals can be enlarged.

In a preferred embodiment, the wind turbine comprises a nacelle. The first bearing component is shaped as an inner ring and the second bearing component is shaped as an outer ring. The inner ring comprises the first contact face and the first front face and is stationary relative to the nacelle, while the outer ring comprises the second contact face and the second front face and is rotatable relative to the nacelle.

In other words, the inner ring and the outer ring both comprise an annular shape. This means that they may be idealised by an inner hollow cylinder and an outer hollow cylinder, respectively. However, it has to be borne in mind that in practice the inner ring and/or the outer ring may have rims, edges, supplementary plates, etc. which make the inner and/or outer ring differ from an idealised hollow cylinder.

As the inner ring is stationary relative to the nacelle, it may be attached by means of a plurality of first attachment holes to the nacelle. More specifically, the inner ring may be flanged to a main shaft, which is stationary arranged within the nacelle and located in the periphery of the nacelle directing towards the rotor hub. The outer ring is rotatable relative to the inner ring. The rotor hub with its rotor blades may be flanged to the outer ring.

In a wind turbine with a stationary inner ring and a rotatable outer ring, there may be not sufficiently space available at the bottom of the outer ring for mounting a lubricant collection device there, e.g. a receptacle. In particular in this case, a lubricant collection system as described above is highly beneficial. The rotatable outer ring is utilised as a means for conveying, i.e. carrying, the lubricant leaking out in the bottom part of the bearing to the upper part of the bearing where it can be scraped off and collected.

In an alternative embodiment, the wind turbine comprises a nacelle and the first bearing component is shaped as an outer ring and the second bearing component is shaped as an inner ring. The outer ring comprises the first contact face and the first front face and is stationary relative to the nacelle, while the inner ring comprises the second contact face and the second front face and is rotatable relative to the nacelle.

Both alternatives, i.e. the inner ring being stationary on the one hand or rotatable relative to the nacelle on the other hand, has advantages. It depends on the specific design of the wind turbine, in particular of the rotor of the wind turbine, which one is the preferred realisation.

Wind turbines may be directly or indirectly driven. Directly driven wind turbines transfer a torque generated by wind passing over the rotor blades directly to the rotor of the generator that is rotatable arranged with respect to a stator of the wind turbine. Indirectly driven wind turbines comprise a gear box or a transmission arranged between the rotating rotor hub and the generator allowing for an adjustment of an angular velocity of the rotor with respect to the stator.

According to the invention, the wind turbine is a direct drive wind turbine.

In another preferred embodiment, the wind turbine comprises a main bearing and the main bearing comprises at least one afore described bearing.

The main shaft rotatable mounts the rotor hub via the main bearing. In other words, the bearing which connects the rotating rotor hub and the nacelle is called the main bearing.

A huge number of rotations can be expected for the rotor hub during its lifetime in a working wind turbine. Thus, an amount of lubricant leaking out of the contact section of the bearing has to be expected which is considerable, compared to other bearings in a wind turbine, such as pitch bearings or the yaw bearing. Therefore, a bearing with a lubricant collection system is of great value and benefit for a wind turbine.

Finally, the invention is also directed towards a method of collecting a lubricant leaking out of a bearing. The method comprises a first step wherein the scraper scrapes off the lubricant escaping from in-between the first contact face and the second contact face and adhering to the second front face of the bearing. Furthermore, it comprises a second step wherein the scraper guides the lubricant to a lubricant collection device by means of gravitational force.

In a preferred embodiment of the method, the first bearing component is shaped as an inner ring and the second bearing component is shaped as an outer ring. Furthermore, the lubricant is carried from a lower section of the outer ring to an upper section of the outer ring, particularly before being scraped off.

The method thus uses the rotatable outer ring for transporting, i.e. carrying or conveying, the leaking lubricant from a lower section of the annular bearing to an upper section of the annular bearing. It is thus an advantageous way of transporting and collecting the lubricant and avoiding distribution among other parts of the bearing or the environment.

### BRIEF DESCRIPTION OF THE DRAWINGS

Embodiments of the invention will now be described, by way of example only, with reference to the accompanying drawings, of which:
- FIG. 1:: shows parts of a bearing with a lubricant collection system in a cross-sectional view;
- FIG. 2:: shows parts of a bearing with a lubricant collection system focussing on a scraper and a lubricant in a cross-sectional view;
- FIG. 3:: shows parts of a bearing with a lubricant collection system focussing on the lubricant collection system in a cross-sectional view;
- FIG. 4:: shows parts of a bearing with a lubricant collection system in a perspective view;
- FIG. 5:: illustrates parts of a prior art wind turbine in a cross-sectional view;
- FIG. 6:: illustrates a wind turbine in a cross-sectional view.

Illustration in the drawing is schematically. It is noted that for similar or identical elements in different figures same reference signs will be used.

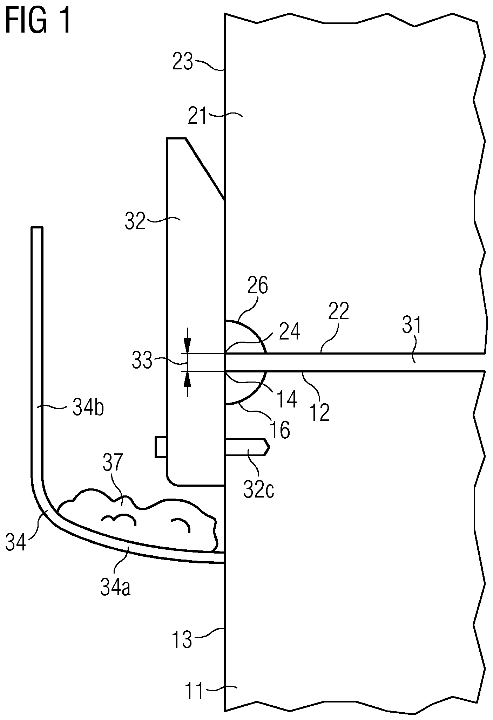

FIGS. 1 to 3 show exemplarily a bearing with a lubricant collection system.

FIG. 1 shows parts of the bearing in a cross-sectional view in a plane parallel to an axis of rotation of the bearing. The bearing comprises a first bearing component 11 comprising an inner ring and a second bearing component 21 comprising an outer ring. A first contact face 12 and a second contact face 22 can be seen, which are arranged opposite to each other and in a relatively small distance to each other. A section or area in-between the contact faces 12, 22 is called a contact section 31. A distance between a first bearing edge 14 and a second bearing edge 24 determines a bearing gap 33. Lubricant 37 that escapes from the contact section 31 can escape via the bearing gap 33, i.e. along the bearing edges 14, 24. The first contact face 12 forms a first angle 16 with the first front face 13; the second contact face 22 forms a second angle 26 with the second front face 23.

A scraper 32 is attached by means of a scraper attachment mechanism 32c to a first front face 13, the scraper attachment mechanism being realised in the example shown in FIG. 1 as a screw. Additionally, a gutter 34, comprising a bottom part 34a and a wall 34b, is attached to the first front face 13, destined for collecting the lubricant 37 that is scraped off. The scraper 32 is destined for scraping off the lubricant 37 from the second front face 23.

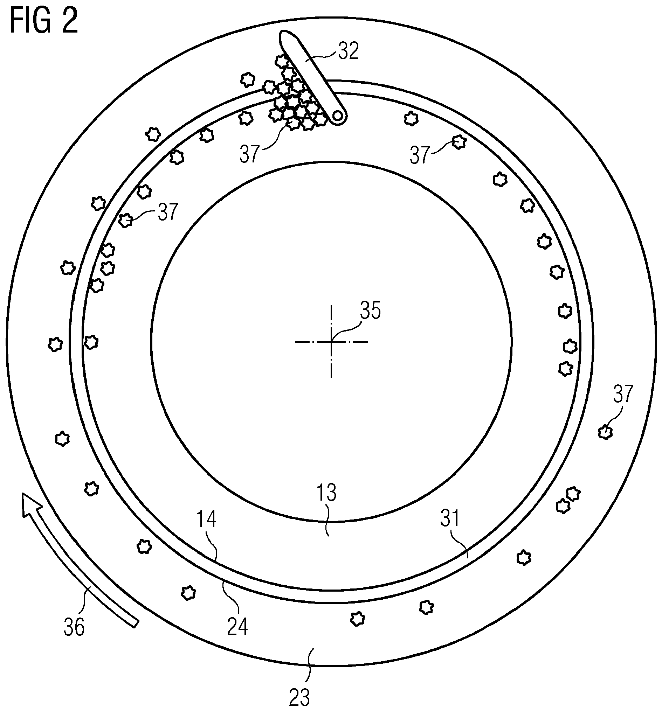

FIG. 2 shows parts of the bearing in a cross-sectional view perpendicular to the cross-sectional view shown in FIG. 1, thus in a plane perpendicular to the axis of rotation 35. For reasons of clarity and comprehensibility, the gutter is not shown in FIG. 2; the focus is on the lubricant 37 leaking out of the contact section 31 of the bearing and on the scraper 32 that scrapes off the lubricant 37 from the second front face 23.

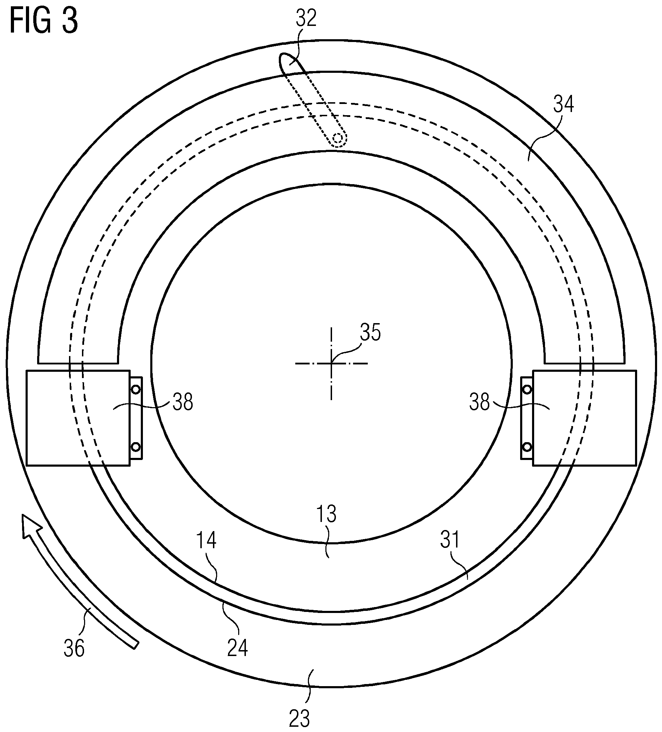

The lubricant 37 escapes from the contact section via the bearing gap 33 between the first bearing edge 14 and the second bearing edge 24. The lubricant 37 flows downward due to gravitational force. Thus, in an upper half of the bearing components, i.e. the inner ring and the outer ring, the escaping lubricant 37 flows to the first surface 13, in a lower half of the bearing components the escaping lubricant 37 flows to the second surface 23. The lubricant 37 at the inner ring can be directly collected by the gutter as will be seen in FIG. 3. In contrast, the lubricant 37 at the outer ring will be transported by the rotating outer ring until it reaches the scraper 32. There, it will be scraped off, guided to the inner ring and subsequently collected by the lubricant collection system.

FIG. 3 shows the bearing in the same perspective as in FIG. 2. However this time, for sake of clarity, the lubricant has been omitted and focus is on a lubricant collection device. The lubricant collection device comprises the gutter 34, arc-curved and two receptacles 38. The lubricant being collected in the gutter 34 flows - due to the gravitational force - directly in one of the receptacles 38. Size of these receptacles 38 is advantageously adjusted depending on servicing intervals of the bearing. During servicing the receptacles 38 may be emptied manually or automatically. If the receptacles 38 are emptied manually, a servicing interval may be in the range between a month and a year.

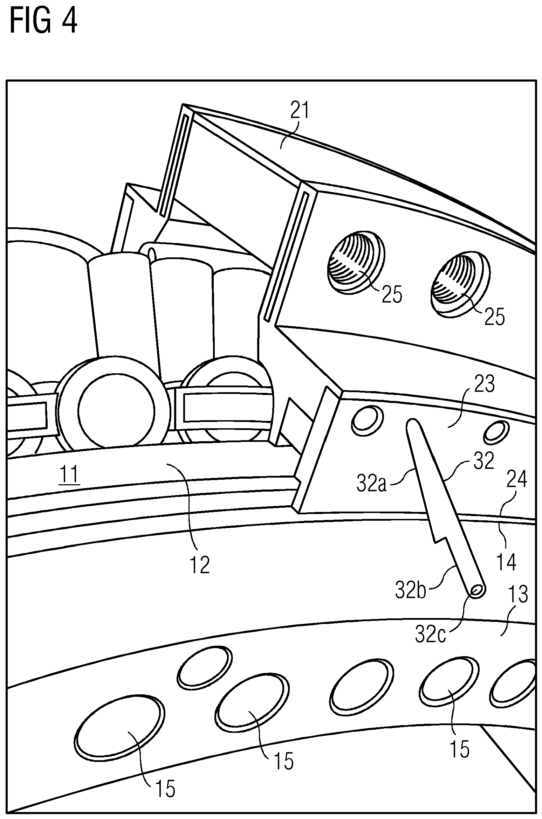

Referring to FIG. 4, parts of a bearing with a lubricant collection system in a perspective view are shown. The presented bearing can e.g. be integrated in a wind turbine. A first bearing component 11 and a second bearing component 21 are depicted. The first bearing component 11 comprises a plurality of first attachment holes 15, comprising a thread and destined for flanging the first bearing component 11 to a main shaft, which is stationary arranged within a nacelle and located in the periphery of the nacelle directing towards a rotor hub. Additionally, a first front face 13 and a first contact face 12 are depicted, adjoining at a first bearing edge 14. Although the first contact face 12 comprises some edges and rims, it is substantially perpendicular to the first front face 13.

FIG. 4 also shows a second front face 23 and a second bearing edge 24 of the second bearing component 21. The second bearing component 21 features a plurality of second attachment holes 25, comprising a thread and destined for flanging the second bearing component 21 to the rotor hub. Finally, a scraper 32 is depicted, too. The scraper 32 comprises a scraper blade 32a, adjoining to a scraper handle 32b. It also comprises a scraper attachment mechanism 32c at the periphery of the scraper handle 32b, which attaches the scraper 32 to the first front face 13.

FIG. 1 to FIG. 3, FIG. 5 and FIG. 6 show cross-sectional views of parts of a bearing and/or a wind turbine. It has to be noted that in each of these figures a gravitational force applies in a vertical direction from an upper part of the figure to a lower part of the figure. For example, a lubricant would in each of these figures experience the gravitational force and would flow downwards or have the tendency to flow downwards due to the gravitational force in each of these figures.

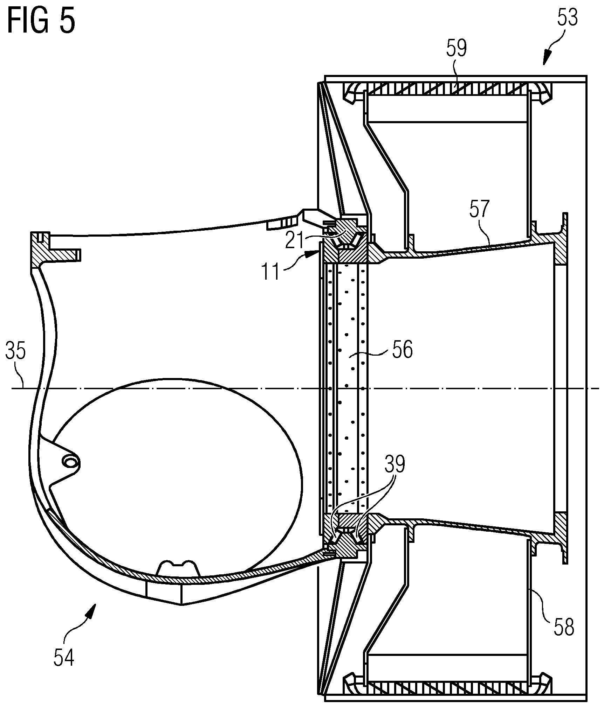

FIG. 5 shows parts of a prior art wind turbine comprising a main bearing 56 in a cross-sectional view in a plane which is parallel to an axis of rotation 35 of a rotor hub 54. In this example, the main bearing 56 is configured as a double tapered roller bearing. The first bearing component 11 comprises an inner ring and the second bearing component 21 comprises an outer ring. The main bearing 56 comprises furthermore rolling elements 39, which are arranged between a tapered wall of the inner ring and the outer ring.

The inner ring, acting as the first bearing component 11, is flanged to a tubular main shaft 57 which is stationary arranged within a nacelle 53 of the wind turbine. A stator 59 is firmly attached to the main shaft 57 by an auxiliary support structure 58. The outer ring, acting as the second bearing component 21, is flanged to the rotor hub 54, which is rotatable around the axis of rotation 35.

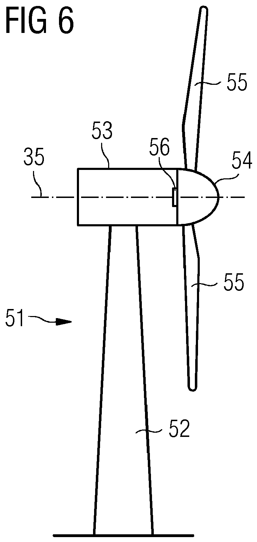

FIG. 6 finally schematically shows a wind turbine 51 comprising a bearing. The bearing is a main bearing 56, signifying that it connects a rotor hub 54, rotating around an axis of rotation 35, and a stationary nacelle 53. FIG. 6 exemplarily shows a 2-bladed wind turbine 51 comprising two rotor blades 55, attached to the rotor hub 54. The nacelle 53 is mounted on a tower 52, e.g. by means of a yaw bearing (not shown).

## Claims

1. A direct drive wind turbine comprising a bearing with a lubricant collection system, wherein the bearing comprises
- a first bearing component (11) with a first contact face (12) and a first front face (13) coupled with the first contact face (12);
- a second bearing component (21) with a second contact face (22) and a second front face (23) coupled with the second contact face (22), the first bearing component (11) and the second bearing component (21) being movable relative to each other;
wherein
- the first contact face (12) and the second contact face (22) are prepared and arranged in a way to accommodate a lubricant (37);
- the bearing comprises a scraper (32), which is attached to the first front face (13) and is in contact with the second front face (23); and
- the scraper (32) is arranged and prepared in a way
- to scrape off the lubricant (37) which escapes from in-between the first contact face (12) and the second contact face (22) and adheres to the second front face (23); and
- to guide the lubricant (37) to a lubricant collection device by means of gravitational force.

2. A direct drive wind turbine according to claim 1,
wherein
- the first contact face (12) and the first front face (13) adjoin each other at a first bearing edge (14) and form a first angle (16);
- the second contact face (22) and the second front face (23) adjoin each other at a second bearing edge (24) and form a second angle (26); and
- the lubricant (37) escapes along the first bearing edge (14) and/or the second bearing edge (24).

3. A direct drive wind turbine according to claim 2,
wherein the first bearing edge (14) is separated from the second bearing (24) edge by a bearing gap (33).

4. A direct drive wind turbine according to one of the preceding claims,
wherein the bearing is a plain bearing and/or a rolling element bearing, in particular a tapered roller bearing.

5. A direct drive wind turbine according to one of the preceding claims,
wherein the first bearing component (11) is movable relative to the second bearing component (21) by a rotational movement.

6. A direct drive wind turbine according to one of the preceding claims,
wherein the lubricant collection device comprises a guiding component, preferably a gutter (34), and a receptacle (38); the guiding component and/or the receptacle (38) being attached to the first front face (12).

7. A direct drive wind turbine according to one of the preceding claims,
wherein the lubricant (37) is a dry lubricant, a semisolid lubricant or a liquid lubricant.

8. A direct drive wind turbine according to one of the preceding claims,
wherein the lubricant (37) is a semisolid lubricant or a liquid lubricant and comprises a mineral oil, a vegetable oil and/or a synthetic oil.

9. A direct drive wind turbine according to one of the preceding claims,
wherein the bearing is arranged in a wind turbine (51).

10. A direct drive wind turbine according to claim 9, wherein
- the wind turbine (51) comprises a nacelle (53);
- the first bearing component (11) is shaped as an inner ring, the inner ring comprising the first contact face (12) and the first front face (13);
- the inner ring is stationary relative to the nacelle (53);
- the second bearing component (21) is shaped as an outer ring, the outer ring comprising the second contact face (22) and the second front face (23); and
- the outer ring is rotatable relative to the nacelle (53).

11. A direct drive wind turbine according to claim 9, wherein
- the wind turbine (51) comprises a nacelle (53);
- the first bearing component (11) is shaped as an outer ring, the outer ring comprising the first contact face (12) and the first front face (13);
- the outer ring is stationary relative to the nacelle (53);
- the second bearing component (21) is shaped as an inner ring, the inner ring comprising the second contact face (22) and the second front face (23); and
- the inner ring is rotatable relative to the nacelle (53).

12. A direct drive wind turbine according to one of the claims 9 to 11,
wherein the bearing is a main bearing (56).

13. Method of collecting a lubricant (37) leaking out of a bearing of a direct drive wind turbine, the bearing comprising
- a first bearing component (11) with a first contact face (12) and a first front face (13) coupled with the first contact face (12);
- a second bearing component (21) with a second contact face (22) and a second front face (23) coupled with the second contact face (22), the first bearing component (11) and the second bearing component (21) being movable relative to each other;
wherein
- the bearing is prepared and arranged in a way to accommodate a lubricant (37) between the first contact face (12) and the second contact face (22);
- the bearing comprises a scraper (32), which is attached to the first front face (13) and is in contact with the second front face (23);
the method comprising
- a first step wherein the scraper (32) scrapes off the lubricant (37) escaping from in-between the first contact face (12) and the second contact face (22) and adhering to the second front face (23); and
- a second step wherein the scraper (32) guides the lubricant (37) to a lubricant collection device by means of gravitational force.

14. Method of collecting a lubricant (37) according to claim 13,
wherein
- the first bearing component (11) is shaped as an inner ring, the inner ring comprising the first contact face (12) and the first front face (13);
- the inner ring is stationary relative to the nacelle (53);
- the second bearing component (21) is shaped as an outer ring, the outer ring comprising the second contact face (22) and the second front face (23);
- the outer ring is rotatable relative to the nacelle (53);
- the outer ring comprises an upper section and a lower section; and
- the lubricant (37) is carried from the lower section of the outer ring to the upper section of the outer ring, particularly before being scraped off.

## Patentansprüche

1. Windkraftanlage mit Direktantrieb, welche ein Lager mit einem Schmiermittel-Sammelsystem umfasst, wobei das Lager umfasst:
- eine erste Lagerkomponente (11) mit einer ersten Kontaktfläche (12) und einer mit der ersten Kontaktfläche (12) gekoppelten ersten Vorderfläche (13);
- eine zweite Lagerkomponente (21) mit einer zweiten Kontaktfläche (22) und einer mit der zweiten Kontaktfläche (22) gekoppelten zweiten Vorderfläche (23), wobei die erste Lagerkomponente (11) und die zweite Lagerkomponente (21) relativ zueinander beweglich sind;
wobei
- die erste Kontaktfläche (12) und die zweite Kontaktfläche (22) derart ausgebildet und angeordnet sind, dass sie ein Schmiermittel (37) aufnehmen;
- das Lager einen Abstreifer (32) umfasst, welcher an der ersten Vorderfläche (13) befestigt ist und sich mit der zweiten Vorderfläche (23) in Kontakt befindet; und
- der Abstreifer (32) derart angeordnet und ausgebildet ist,
- dass er das Schmiermittel (37) abstreift, welches aus dem Zwischenraum zwischen der ersten Kontaktfläche (12) und der zweiten Kontaktfläche (22) entweicht und an der zweiten Vorderfläche (23) anhaftet; und
- dass er das Schmiermittel (37) mittels Schwerkraft zu einer Schmiermittel-Sammelvorrichtung lenkt.

2. Windkraftanlage mit Direktantrieb nach Anspruch 1,
wobei
- die erste Kontaktfläche (12) und die erste Vorderfläche (13) an einer ersten Lagerkante (14) aneinander angrenzen und einen ersten Winkel (16) bilden;
- die zweite Kontaktfläche (22) und die zweite Vorderfläche (23) an einer zweiten Lagerkante (24) aneinander angrenzen und einen zweiten Winkel (26) bilden; und
- das Schmiermittel (37) entlang der ersten Lagerkante (14) und/oder der zweiten Lagerkante (24) entweicht.

3. Windkraftanlage mit Direktantrieb nach Anspruch 2,
wobei die erste Lagerkante (14) von der zweiten Lagerkante (24) durch einen Lagerspalt (33) getrennt ist.

4. Windkraftanlage mit Direktantrieb nach einem der vorhergehenden Ansprüche,
wobei das Lager ein Gleitlager und/oder ein Wälzlager, insbesondere ein Kegelrollenlager ist.

5. Windkraftanlage mit Direktantrieb nach einem der vorhergehenden Ansprüche,
wobei die erste Lagerkomponente (11) bezüglich der zweiten Lagerkomponente (21) durch eine Drehbewegung beweglich ist.

6. Windkraftanlage mit Direktantrieb nach einem der vorhergehenden Ansprüche,
wobei die Schmiermittel-Sammelvorrichtung eine Führungskomponente, vorzugsweise eine Rinne (34), und einen Aufnahmebehälter (38) umfasst; wobei die Führungskomponente und/oder der Aufnahmebehälter (38) an der ersten Vorderfläche (12) befestigt sind.

7. Windkraftanlage mit Direktantrieb nach einem der vorhergehenden Ansprüche,
wobei das Schmiermittel ein Trockenschmiermittel, ein halbfestes Schmiermittel oder ein flüssiges Schmiermittel ist.

8. Windkraftanlage mit Direktantrieb nach einem der vorhergehenden Ansprüche,
wobei das Schmiermittel (37) ein halbfestes Schmiermittel oder ein flüssiges Schmiermittel ist und ein Mineralöl, ein Pflanzenöl und/oder ein synthetisches Öl umfasst.

9. Windkraftanlage mit Direktantrieb nach einem der vorhergehenden Ansprüche,
wobei das Lager in einer Windkraftanlage (51) angeordnet ist.

10. Windkraftanlage mit Direktantrieb nach Anspruch 9,
wobei
- die Windkraftanlage (51) eine Gondel (53) umfasst;
- die erste Lagerkomponente (11) als ein Innenring geformt ist, wobei der Innenring die erste Kontaktfläche (12) und die erste Vorderfläche (13) umfasst;
- der Innenring stationär bezüglich der Gondel (53) ist;
- die zweite Lagerkomponente (21) als ein Außenring geformt ist, wobei der Außenring die zweite Kontaktfläche (22) und die zweite Vorderfläche (23) umfasst; und
- der Außenring drehbar bezüglich der Gondel (53) ist.

11. Windkraftanlage mit Direktantrieb nach Anspruch 9,
wobei
- die Windkraftanlage (51) eine Gondel (53) umfasst;
- die erste Lagerkomponente (11) als ein Außenring geformt ist, wobei der Außenring die erste Kontaktfläche (12) und die erste Vorderfläche (13) umfasst;
- der Außenring stationär bezüglich der Gondel (53) ist;
- die zweite Lagerkomponente (21) als ein Innenring geformt ist, wobei der Innenring die zweite Kontaktfläche (22) und die zweite Vorderfläche (23) umfasst; und
- der Innenring drehbar bezüglich der Gondel (53) ist.

12. Windkraftanlage mit Direktantrieb nach einem der Ansprüche 9 bis 11,
wobei das Lager ein Hauptlager (56) ist.

13. Verfahren zum Sammeln eines Schmiermittels (37), das aus einem Lager einer Windkraftanlage mit Direktantrieb austritt, wobei das Lager umfasst:
- eine erste Lagerkomponente (11) mit einer ersten Kontaktfläche (12) und einer mit der ersten Kontaktfläche (12) gekoppelten ersten Vorderfläche (13);
- eine zweite Lagerkomponente (21) mit einer zweiten Kontaktfläche (22) und einer mit der zweiten Kontaktfläche (22) gekoppelten zweiten Vorderfläche (23), wobei die erste Lagerkomponente (11) und die zweite Lagerkomponente (21) relativ zueinander beweglich sind;
wobei
- das Lager derart angeordnet und ausgebildet ist, dass es ein Schmiermittel (37) zwischen der ersten Kontaktfläche (12) und der zweiten Kontaktfläche (22) aufnimmt;
- das Lager einen Abstreifer (32) umfasst, welcher an der ersten Vorderfläche (13) befestigt ist und sich mit der zweiten Vorderfläche (23) in Kontakt befindet;
wobei das Verfahren umfasst:
- einen ersten Schritt, in dem der Abstreifer (32) das Schmiermittel (37) abstreift, das aus dem Zwischenraum zwischen der ersten Kontaktfläche (12) und der zweiten Kontaktfläche (22) entweicht und an der zweiten Vorderfläche (23) anhaftet; und
- einen zweiten Schritt, in dem der Abstreifer (32) das Schmiermittel (37) mittels Schwerkraft zu einer Schmiermittel-Sammelvorrichtung lenkt.

14. Verfahren zum Sammeln eines Schmiermittels (37) nach Anspruch 13,
wobei
- die erste Lagerkomponente (11) als ein Innenring geformt ist, wobei der Innenring die erste Kontaktfläche (12) und die erste Vorderfläche (13) umfasst;
- der Innenring stationär bezüglich der Gondel (53) ist;
- die zweite Lagerkomponente (21) als ein Außenring geformt ist, wobei der Außenring die zweite Kontaktfläche (22) und die zweite Vorderfläche (23) umfasst;
- der Außenring drehbar bezüglich der Gondel (53) ist;
- der Außenring einen oberen Abschnitt und einen unteren Abschnitt umfasst; und
- das Schmiermittel (37) vom unteren Abschnitt des Außenrings zum oberen Abschnitt des Außenrings transportiert wird, insbesondere bevor es abgestreift wird.

## Revendications

1. Éolienne à entraînement direct comprenant un palier doté d'un système collecteur de lubrifiant, dans laquelle le palier comprend :
- un premier élément de palier (11) présentant une première surface de contact (12) et une première face avant (13) accouplée à la première surface de contact (12) ;
- un second élément de palier (21) présentant une seconde surface de contact (22) et une seconde face avant (23) accouplée à la seconde surface de contact (22), le premier élément de palier (11) et le second élément de palier (21) étant mobiles l'un par rapport à l'autre ;
dans laquelle :
- la première surface de contact (12) et la seconde surface de contact (22) sont préparées et conçues de manière à contenir un lubrifiant (37) ;
- le palier comprend un racloir (32) qui est fixé à la première face avant (13) et qui est au contact de la seconde face avant (23) ; et
- le racloir (32) est conçu et préparé de manière à :
- racler le lubrifiant (37) qui s'échappe entre la première surface de contact (12) et la seconde surface de contact (22), et qui adhère à la seconde face avant (23) ; et
- guider le lubrifiant (37) vers un dispositif collecteur de lubrifiant, au moyen de la force de gravité.

2. Éolienne à entraînement direct selon la revendication 1, dans laquelle :
- la première surface de contact (12) et la première face avant (13) se rejoignent l'une l'autre à un premier bord de palier (14) et forment un premier angle (16) ;
- la seconde surface de contact (22) et la seconde face avant (23) se rejoignent l'une l'autre à un second bord de palier (24) et forment un second angle (26) ; et
- le lubrifiant (37) s'échappe le long du premier bord de palier (14) et/ou du second bord de palier (24).

3. Éolienne à entraînement direct selon la revendication 2, dans laquelle le premier bord de palier (14) est séparé du second bord de palier (24) par un jeu de palier (33).

4. Éolienne à entraînement direct selon l'une des revendications précédentes,
dans laquelle le palier est un palier lisse et/ou un palier à éléments roulants, en particulier un roulement à rouleaux coniques.

5. Éolienne à entraînement direct selon l'une des revendications précédentes,
dans laquelle le premier élément de palier (11) peut se déplacer par rapport au second élément de palier (21) selon un mouvement de rotation.

6. Éolienne à entraînement direct selon l'une des revendications précédentes,
dans laquelle le dispositif collecteur de lubrifiant comprend un élément de guidage, de préférence une goulotte (34), et un récipient (38) ;
l'élément de guidage et/ou le récipient (38) étant fixé(s) à la première face avant (12).

7. Éolienne à entraînement direct selon l'une des revendications précédentes,
dans laquelle le lubrifiant (37) est un lubrifiant sec, un lubrifiant semi-solide ou un lubrifiant liquide.

8. Éolienne à entraînement direct selon l'une des revendications précédentes,
dans laquelle le lubrifiant (37) est un lubrifiant semi-solide ou un lubrifiant liquide et comprend une huile minérale, une huile végétale et/ou une huile synthétique.

9. Éolienne à entraînement direct selon l'une des revendications précédentes,
dans laquelle le palier est placé dans une éolienne (51).

10. Éolienne à entraînement direct selon la revendication 9, dans laquelle :
- l'éolienne (51) comprend une nacelle (53) ;
- le premier élément de palier (11) a la forme d'une bague intérieure, la bague intérieure comprenant la première surface de contact (12) et la première face avant (13) ;
- la bague intérieure est fixe par rapport à la nacelle (53) ;
- le second élément de palier (21) a la forme d'une bague extérieure, la bague extérieure comprenant la seconde surface de contact (22) et la seconde face avant (23) ; et
- la bague extérieure peut tourner par rapport à la nacelle (53).

11. Éolienne à entraînement direct selon la revendication 9, dans laquelle :
- l'éolienne (51) comprend une nacelle (53) ;
- le premier élément de palier (11) a la forme d'une bague extérieure, la bague extérieure comprenant la première surface de contact (12) et la première face avant (13) ;
- la bague extérieure est fixe par rapport à la nacelle (53) ;
- le second élément de palier (21) a la forme d'une bague intérieure, la bague intérieure comprenant la seconde surface de contact (22) et la seconde face avant (23) ; et
- la bague intérieure peut tourner par rapport à la nacelle (53).

12. Éolienne à entraînement direct selon l'une des revendications 9 à 11,
dans laquelle le palier est un palier lisse (56).

13. Procédé pour recueillir un lubrifiant (37) s'échappant d'un palier d'éolienne à entraînement direct, le palier comprenant :
- un premier élément de palier (11) présentant une première surface de contact (12) et une première face avant (13) accouplée à la première surface de contact (12) ;
- un second élément de palier (21) présentant une seconde surface de contact (22) et une seconde face avant (23) accouplée à la seconde surface de contact (22), le premier élément de palier (11) et le second élément de palier (21) étant mobiles l'un par rapport à l'autre ;
dans lequel :
- le palier est préparé est conçu de manière à contenir un lubrifiant (37) entre la première surface de contact (12) et la seconde surface de contact (22) ;
- le palier comprend un racloir (32) qui est fixé à la première face avant (13) et qui est au contact de la seconde face avant (23) ; et
le procédé comprenant :
- une première étape dans laquelle le racloir (32) racle le lubrifiant (37) s'échappant entre la première surface de contact (12) et la seconde surface de contact (22) et adhérant à la seconde face avant (23) ; et
- une seconde étape dans laquelle le racloir (32) guide le lubrifiant (37) vers un dispositif collecteur de lubrifiant, au moyen de la force de gravité.

14. Procédé pour recueillir un lubrifiant (37) selon la revendication 13,
dans lequel :
- le premier élément de palier (11) a la forme d'une bague intérieure, la bague intérieure comprenant la première surface de contact (12) et la première face avant (13) ;
- la bague intérieure est fixe par rapport à la nacelle (53) ;
- le second élément de palier (21) a la forme d'une bague extérieure, la bague extérieure comprenant la seconde surface de contact (22) et la seconde face avant (23) ;
- la bague extérieure peut tourner par rapport à la nacelle (53) ;
- la bague extérieure comprend une partie supérieure et une partie inférieure ; et
- le lubrifiant (37) est transporté de la partie inférieure de la bague extérieure à la partie supérieure de la bague extérieure, en particulier avant d'être raclé.
